# EUROPEAN PATENT SPECIFICATION

(11) **EP 4 220 825 B1**
(45) Date of publication and mention of the grant of the patent: **17.12.2025**
(21) Application number: 21958920.7
(22) Date of filing: 30.09.2021
(51) Int. Cl.: H01M 50/103, H01M 50/147, H01M 50/15, H01M 50/586, H01M 50/591, H01M 50/593

(54) **BATTERY CELL, BATTERY, ELECTRIC APPARATUS, AND MANUFACTURING METHOD AND DEVICE OF BATTERY CELL**
BATTERIEZELLE, BATTERIE, ELEKTRISCHES GERÄT UND VERFAHREN ZUR HERSTELLUNG EINER BATTERIEZELLE
CELLULE DE BATTERIE, BATTERIE, APPAREIL ELECTRIQUE ET PROCEDE DE FABRICATION D'UNE CELLULE DE BATTERIE

(43) Date of publication of application: 02.08.2023
(73) Proprietor: Contemporary Amperex Technology (Hong Kong) Limited, Central, Central And Western District (HK)
(72) Inventor: WU, Yukun, Ningde, Fujian 352100 (CN); ZHANG, Xiaoping, Ningde, Fujian 352100 (CN); GE, Xiaoming, Ningde, Fujian 352100 (CN)
(74) Representative: Lorenz Seidler Gossel Part. mbB
(86) International application number: PCT/CN2021/122281
(87) International publication number: WO 2023/050348

(56) References cited:
- CN-A- 109 152 264
- CN-A- 110 710 025
- CN-U- 208 690 318
- CN-U- 209 947 884
- CN-U- 210 956 769
- CN-U- 213 520 133

## Description

### TECHNICAL FIELD

This application relates to the field of batteries, and specifically, to a battery cell, a battery, an electric apparatus, and a manufacturing method of battery cell.

### BACKGROUND

Chemical batteries, electrochemical batteries, electrochemical cells, or electric batteries are a type of apparatus that converts chemical energy of positive and negative electrode active substances into electrical energy through redox reaction. Unlike ordinary redox reaction, such redox reaction has separate oxidation and reduction reactions, with oxidation occurring at a negative electrode and reduction occurring at a positive electrode, and electrons are gained and lost through an external circuit so as to form current. This is the essential feature of all batteries. After long-term research and development, chemical batteries have seen many varieties and wide application, with some large enough to fit in a room and some small enough to be measured in millimeters. With the development of modern electronic technologies, very high requirements are imposed on chemical batteries. Every breakthrough in chemical battery technologies has brought revolutionary development in electronic devices. Many electrochemical scientists in the world have focused their research and development on the field of chemical batteries as power sources for electric vehicles.

As a type of chemical battery, lithium-ion batteries have advantages of small volume, high energy density, high power density, long cycle life, long storage time, and the like, and are widely used in some electronic devices, electric transports, electric toys, and electric devices. For example, lithium-ion batteries are widely used in mobile phones, laptop computers, electric bicycles, electric vehicles, electric airplanes, electric ships, electric toy cars, electric toy ships, electric toy airplanes, electric tools, and the like.

Lithium-ion batteries are applied in three forms: battery cell, battery module, and battery pack. With the continuous development of lithium-ion battery technologies, higher requirements are imposed on the performance of lithium-ion batteries so that various factors can be taken into consideration in design of lithium-ion batteries. A protective film (mylar) inside a battery cell is connected with an insulator through hot melt. Affected by factors such as temperature, pressure, and protective film material, the protective film is prone to drawing in over-melting and falling off in under-melting, resulting that the protective film cannot protect electrode assemblies. Drawing in over-melting is very likely to cause weld porosity of end covers.

CN 208 690 318 U relates to a top cover assembly and a battery unit of a battery unit. CN 213 520 133 U relates to a top cover assembly of a secondary battery.

### SUMMARY

This application proposes a battery cell, a battery, an electric apparatus, and a manufacturing method of battery cell. A protective film and an insulator being fit together through snap connection does not require hot-melt connection during assembly, thereby avoiding drawing in over-melting, falling off in under-melting, and the like of the protective film caused by hot-melt connection.

According to a first aspect of this application, a battery cell is provided and includes:
an end cover and a housing, the end cover and the housing forming an accommodating cavity;
an electrode assembly accommodated in the accommodating cavity;
an insulator configured to isolate the end cover from the electrode assembly; and
a protective film fitting around an outer circumference of the electrode assembly, the protective film and the insulator being fit together through snap connection. The insulator is provided with buckles, the protective film is provided with holes corresponding to the buckles, and the protective film and the insulator are fit together through snap connection with the holes and the buckles.

The protective film and the insulator being fit together through snap connection does not require hot-melt connection during assembly, thereby avoiding drawing caused by hot-melt connection while such drawing affects the quality of welding between the end cover and the housing. In addition, the protective film and the insulator being fit together through snap connection offers higher reliability, which can prevent fall-off of the protective film caused by undesirable hot melt of the protective film and the insulator and hence further keep a relative relationship of the protective film and the electrode assembly unchanged for a long time, so that the electrode assembly is better protected and the safety of batteries is improved. Further, the protective film and the insulator being fit together through snap connection saves both time and labor during the assembly, improving production efficiency of batteries.

A fitting structure of the protective film and the insulator may be designed in various types. The mating structure of the buckle and the hole not only is convenient for design and manufacturing, but also helps to fit the protective film and the insulator together. In addition, the protective film and the insulator that are fit together through snap connection are difficult to disengage, thereby guaranteeing the fitting firmness of the protective film and the insulator.

In some embodiments, the insulator has an outer side surface facing toward an inner wall of the housing, and the buckles are disposed on the outer side surface.

With the protective film fitting around the outer circumference of the electrode assembly, the buckles are disposed on the outer side surface of the insulator so that the protective film can be fit to the insulator upon being folded. This offers a quick fitting without additional adjustment, and hence an easy fitting of the protective film and the insulator.

In some embodiments, the outer side surface is provided with grooves, and the buckles are disposed in the grooves.

High energy density of batteries is a quality goal that is consistently pursued in a battery manufacturing process. Therefore, the volume of the batteries needs to be reduced, and the utilization of the internal space of the batteries needs to be increased. The buckle being disposed in the groove can reduce the space occupied in the accommodating cavity, and therefore avoid that the housing has a too large volume but inefficient volume utilization, which contributes to improving the energy density of the batteries.

In some embodiments, a distance between the outer side surface and the corresponding inner wall is J, and a distance between a surface of the buckle facing toward the housing and the corresponding inner wall is K, where J≤K.

During assembly of the battery cell, the insulator, the electrode assembly, and the protective film need to be together mounted in the housing. The limitation on a distance relationship between the buckle and the outer side surface prevents the buckle from protruding out of the outer side surface of the insulator, helping the insulator to enter the housing and facilitating assembly of the battery cell.

In some embodiments, in a thickness direction of the end cover, the groove has a first surface and a second surface that are disposed opposite, the second surface is further away from the end cover than the first surface, and the buckle is disposed on the second surface.

Because different types of batteries have different internal structures, the buckle in the groove can be disposed at different locations depending on actual needs to satisfy different battery use needs. The buckle being disposed on the second surface allows the protective film and the insulator to obtain high fitting firmness.

In some embodiments, the first surface is provided with a blocking portion extending toward the second surface, the blocking portion and the buckle are spaced apart, and the blocking portion and the protective film overlap in a receding direction of the groove.

There is a relatively small gap between the blocking portion and the buckle. With the protective film and the insulator fit together through snap connection, the blocking portion forms a position limiting structure for the protective film, and together with the buckle can effectively prevent the protective film from running out of the buckle.

In some embodiments, the groove has a third surface for connecting the first surface and the second surface, and an end portion of the blocking portion facing toward the second surface extends toward the third surface to form a bending portion.

The bending portion can provide two functions. When the protective film and the insulator are being fit together through snap connection, the bending portion forms a guide structure to help an edge of the protective film to enter the buckle. After the protective film and the insulator are fit together through snap connection, the bending portion can further effectively prevent the protective film from running out of the buckle.

In some embodiments, the insulator has lug bosses protruding toward the electrode assembly, the lug bosses are configured to abut against the electrode assembly, and the buckles are disposed on the lug bosses.

The lug boss substantially increases the thickness of the insulator and therefore has much room for design. With reasonable use of the structure of the lug boss, buckles having different structures can be designed as needed.

In some embodiments, in a length direction of the end cover, the lug boss has two end surfaces, and the groove runs through the two end surfaces.

The groove is designed as a structure with two ends open, so that the protective film and the insulator are in close engagement after being fit together through snap connection and the protective film does not wrinkle at the fitting location and still remains flat.

In some embodiments, a height of the part of the protective film located in the groove is H, and a height of the groove is I, where H<I.

The height of the part of the protective film located in the groove is limited, so that the protective film and the insulator are in close engagement after being fit together through snap connection and the protective film does not wrinkle at the fitting location and still remains flat.

In some embodiments, the protective film includes two first protection portions that are disposed opposite in a thickness direction of the electrode assembly and two second protection portions that are disposed opposite each other in the length direction of the end cover, and the thickness direction of the end cover, the thickness direction of the electrode assembly, and the length direction of the end cover are perpendicular to each other; and
each of the second protection portions is provided with an extension portion, where the extension portion extends to a side of the first protection portion further away from the electrode assembly, the holes include first holes disposed in the first protection portion and second holes disposed in the extension portion, and the second hole and the first hole partially overlap to make the second hole and the first hole fit in a same buckle; or
each of the first protection portions is provided with an extension portion, where the extension portion extends to a side of the second protection portion further away from the electrode assembly, the holes include first holes disposed in the second protection portion and second holes disposed in the extension portion, and the second hole and the first hole partially overlap to make the second hole and the first hole fit in a same buckle.

With the extension portion provided, the extension portion together with the buckle can connect the two first protection portions and the two second protection portions, so that all parts of the protective film are combined into a whole and difficult to disengage, and the connection reliability of the protective film and the insulator is increased.

In some embodiments, the insulator is provided with holes, the protective film is provided with lug bosses corresponding to the holes, and the protective film and the insulator are fit together through snap connection with the lug bosses and the holes.

A fitting structure of the protective film and the insulator may be designed in various types. The mating structure of the lug boss and the hole also helps to fit the protective film and the insulator together so that the protective film can be fit to the insulator upon being folded. This offers a quick fitting without additional adjustment, and hence an easy fitting of the protective film and the insulator.

In some embodiments, a connecting portion is disposed between the lug boss and an inner wall of the protective film, the hole includes a first section and a second section, the second section is disposed on a side of the first section further away from the end cover, at least part of the connecting portion is disposed at the second section, the lug boss and the first section are in interference fit to prevent the lug boss from running out of the first section.

The interference fit of the lug boss and the first section can prevent the lug boss from easily running out of the hole after the lug boss enters the hole, thereby guaranteeing fitting firmness of the protective film and the insulator.

According to a second aspect of this application, a battery is provided and includes the battery cell in any one of the foregoing embodiments.

According to a third aspect of this application, an electric apparatus is provided and includes the battery cell in any one of the foregoing embodiments, where the battery cell is configured to supply electrical energy.

According to a fourth aspect of this application, a manufacturing method of a battery cell is provided and includes:
providing an end cover and an insulator;
providing an electrode assembly, and making the insulator isolate the end cover from the electrode assembly;
providing a protective film, fitting the protective film around an outer circumference of the electrode assembly, and fitting the protective film and the insulator together, wherein the insulator is provided with buckles, the protective film is provided with holes corresponding to the buckles, and the protective film and the insulator are fit together through snap connection with the holes and the buckles; and
providing a housing, and connecting the end cover and the housing to form an accommodating cavity for accommodating the electrode assembly.

A manufacturing device of battery cell, which is not encompassed by the subject-matter of the claims, may include:
a providing module, configured to provide an end cover, a housing, an electrode assembly, an insulator, and a protective film; and
an assembly module, configured for the insulator to isolate the end cover from the electrode assembly, and configured to fit the protective film around outer circumference of the electrode assembly, fit the protective film and the insulator together, wherein the insulator is provided with buckles, the protective film is provided with holes corresponding to the buckles, and the protective film and the insulator are fit together through snap connection with the holes and the buckles, and connect the end cover and the housing to form an accommodating cavity for accommodating the electrode assembly.

### BRIEF DESCRIPTION OF DRAWINGS

The accompanying drawings described herein are intended for better understanding of this application and constitute a part of this application. Illustrative embodiments and descriptions thereof in this application are intended to interpret this application without constituting any improper limitation on this application. In the accompanying drawings:
FIG. 1 is a schematic structural diagram of some embodiments of a vehicle using a battery cell according to this application;
FIG. 2 is a schematic structural diagram of some embodiments of a battery using a battery cell according to this application;
FIG. 3 is a three-dimensional schematic exploded view of a battery cell according to some embodiments of this application;
FIG. 4 is a three-dimensional schematic diagram of a battery cell according to some embodiments of this application;
FIG. 5 is a three-dimensional schematic diagram of an insulator according to some embodiments of this application;
FIG. 6 is an enlarged view of a portion B in FIG. 5;
FIG. 7 is a three-dimensional schematic diagram of a folded protective film according to some embodiments of this application;
FIG. 8 is a schematic cross-sectional view of a buckle according to some embodiments of this application;
FIG. 9 is a schematic cross-sectional view of a buckle according to some embodiments of this application;
FIG. 10 is a schematic cross-sectional view of a buckle according to some embodiments of this application;
FIG. 11 is a schematic cross-sectional view of a buckle according to some embodiments of this application;
FIG. 12 is an enlarged view of a portion A in FIG. 4;
FIG. 13 is a schematic cross-sectional view of a buckle according to some embodiments of this application;
FIG. 14 is a schematic front view of an unfolded protective film according to some embodiments of this application;
FIG. 15 is a schematic front view of an unfolded protective film according to some embodiments of this application;
FIG. 16 is a three-dimensional schematic diagram of a battery cell according to some embodiments of this application;
FIG. 17 is a three-dimensional schematic diagram of an insulator according to some embodiments of this application;
FIG. 18 is a three-dimensional schematic diagram of a folded protective film according to some embodiments of this application;
FIG. 19 is a three-dimensional schematic diagram of a battery cell according to some embodiments of this application;
FIG. 20 is a three-dimensional schematic diagram of an insulator according to some embodiments of this application;
FIG. 21 is a three-dimensional schematic diagram of a folded protective film according to some embodiments of this application;
FIG. 22 is a schematic front view of a battery cell according to some embodiments of this application;
FIG. 23 is a C-C cross-sectional view of FIG. 22;
FIG. 24 is an enlarged view of a portion D in FIG. 23;
FIG. 25 is a three-dimensional schematic diagram of a hole and a lug boss according to some embodiments of this application;
FIG. 26 is a schematic flowchart of a manufacturing method of battery cell according to some embodiments of this application; and
FIG. 27 is a schematic structural diagram of a manufacturing device of battery cell.

Reference signs: 1. end cover; 2. insulator; 201. body; 2011. outer side surface; 2012. first surface; 2013. third surface; 2014. second surface; 2015. blocking portion; 2016. groove; 202. lug boss; 203. buckle; 204. hole; 2041. first section; 2042. second section; 3. electrode assembly; 301. electrode terminal; 4. protective film; 401. first protection portion; 402. first protection portion; 403. second protection portion; 404. second protection portion; 405. third protection portion; 406. first extension portion; 407. second extension portion; 408. hole; 4081. first hole; 4082. second hole; 409. folding line; 410. lug boss; 411. connecting portion; 5. housing; 6. vehicle; 7. battery; 8. controller; 9. motor; 10. battery cell; 11. box; 1101. top cover; 1102. bottom box; 12. manufacturing device of battery cell; 1201. providing module; and 1202. assembly module.

### DESCRIPTION OF EMBODIMENTS

To make the objectives, technical solutions, and advantages of this application clearer, the following clearly and completely describes the technical solutions in the embodiments of this application with reference to the accompanying drawings showing a plurality of embodiments of this application. It should be understood that the embodiments described are only some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", "there be", "have", "contain", and "with" in this specification, claims, and brief description of drawings of this application are inclusive terms. Therefore, if a method or an apparatus "includes", "comprises", or "has", for example, one or more steps or elements, the method or the apparatus contains the one or more steps or elements, but is not limited to the one or more elements. In the specification, claims, or accompanying drawings of this application, the terms "first", "second", and the like are intended to distinguish between different objects rather than to indicate a particular order or relative importance. In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the descriptions of this application, "a plurality of" means at least two unless otherwise stated.

In the descriptions of this application, it should be understood that the orientations or positional relationships indicated by the terms "center", "transverse", "length", "width", "upper", "lower", "front", "rear", "left", "right", "perpendicular", "horizontal", "top", "bottom", "inside", "outside", "axial", "radial", "circumferential", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In the description of this application, it should also be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skill in the art can understand specific meanings of these terms in this application as appropriate to specific situations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

As mentioned above, it should be noted that when used in this specification, the term "include/contain" is used to clearly indicate existence of the feature, integer, step, or component, but does not exclude existence or addition of one or more other features, integers, steps, or components or sets of features, integers, steps, or components. As used in this application, singular forms "one", "a" and "the" also include plural forms, unless otherwise clearly dictated in the context.

The terms "a" and "one" in this specification can mean a single, but can also have the same meaning as "at least one" or "one or more". The term "approximately" generally means a mentioned value plus or minus 10%, or more specifically the mentioned value plus or minus 5%. The term "or" used in the claims means "and/or" unless it is clearly stated that the term "or" only refers to an alternative solution.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

The battery mentioned in this application is a single physical module that includes one or more battery cells for providing a higher voltage and capacity. For example, the battery mentioned in this application may include a battery module, a battery pack, or the like.

Rechargeable batteries are also referred to as secondary batteries (Secondary Battery), secondary cells, or storage batteries. A material and process for manufacturing the rechargeable battery are different from those for manufacturing the primary battery. Advantages of the rechargeable battery are that the rechargeable battery can be used cyclically for a plurality of times after being charged, and has a larger output current load capacity than most primary batteries. Currently, common types of rechargeable batteries include: lead-acid battery, nickel-hydrogen battery, and lithium-ion battery. The lithium-ion battery has advantages such as light weight, large capacity (the capacity is 1.5 to 2 times that of the nickel-hydrogen battery of the same weight), and zero memory effect, and has a very low self-discharge rate. Therefore, despite its relatively high price, the lithium-ion battery has still been widely applied. The lithium-ion battery is also applied to battery electric vehicles and hybrid electric vehicles. A lithium-ion battery used for this purpose has a relatively low capacity but greater output and charging currents. Some have longer service life, and the cost is higher.

Working of the lithium-ion battery (the battery is a battery cell) mainly relies on migration of lithium ions between the positive electrode plate and the negative electrode plate. The lithium-ion battery uses an inserted lithium compound as an electrode material. Currently, main common materials used for a positive electrode of the lithium-ion battery include: lithium cobalt oxide (LiCoO₂), lithium manganate oxide (LiMn₂O₄), lithium nickel oxide (LiNiO₂), and lithium iron phosphate (LiFePO₄). The separator is disposed between the positive electrode plate and the negative electrode plate to form a film structure with three layers of materials. The film structure is usually wound or laminated to form an electrode assembly in a desired shape. For example, a film structure with three layers of materials in a cylinder-shaped battery is wound into a cylinder-shaped electrode assembly, and a film structure in a square-shaped battery is approximately wound or laminated into a cuboid-shaped electrode assembly.

A plurality of battery cells can be connected in series and/or in parallel through an electrode terminal for various application scenarios. In some high-power application scenarios such as an electric vehicle, the application of the battery cell includes three levels: a battery cell, a battery module, and a battery pack. The battery mentioned in this application includes a battery module or a battery pack. The battery module is formed by electrically connecting a specific quantity of batteries and putting the batteries into a frame to protect the batteries from external impact, heat, vibration, and the like. The battery pack is a final state of a battery system assembled in an electric vehicle. Most existing battery packs are manufactured by installing various control and protection systems such as a battery management system (BMS) and a thermal management component on one or more battery modules. With the development of technologies, the battery module may be omitted, that is, the battery is directly formed using a plurality of battery cells. With such improvement, weight energy density and volumetric energy density of the battery are improved, and the number of parts is remarkably reduced.

In the related art, a protective film (mylar) inside a battery cell is connected with an insulator through hot melt connection. The protective film is prone to drawing in over-melting and falling off in under-melting. Drawing in over-melting causes weld porosity of end covers and housings, and falling off in under-melting makes the protective film unable to protect electrode assemblies. In this application, a protective film and an insulator being fit together through snap connection does not require hot-melt connection during assembly, thereby avoiding drawing in over-melting, falling off in under-melting, and the like of the protective film caused by hot-melt connection.

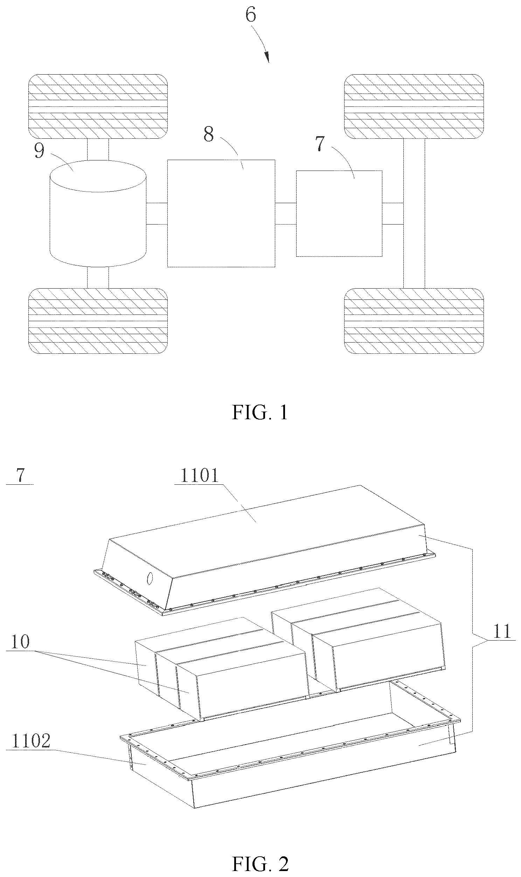

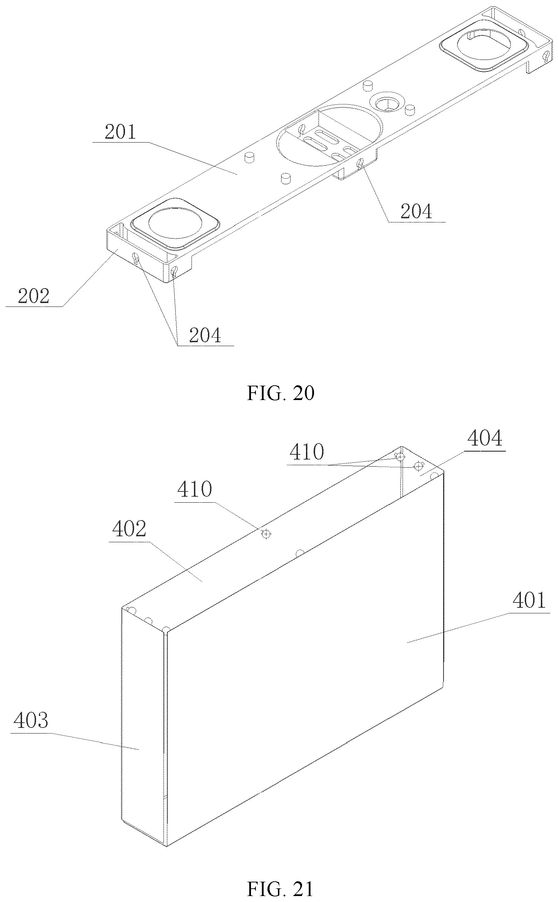

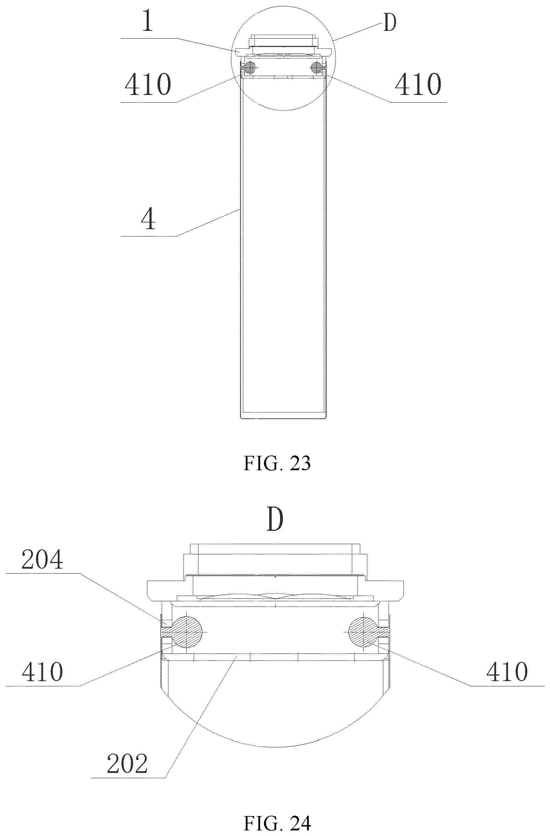

For better understanding of this application, the following describes in detail the embodiments of this application with reference to FIG. 1 to FIG. 27.

The battery disclosed in the embodiments of this application may be used without limitation in electric apparatuses such as vehicles, ships, or aircrafts. The battery cell, the battery, and the like disclosed in this application may be used to constitute a power supply system of that electric apparatus, which helps to improve the performance and service life of the battery.

An embodiment of this application provides an electric apparatus that uses a battery as a power source. The electric apparatus may be, but is not limited to, a mobile phone, a tablet, a laptop computer, an electric toy, an electric bicycle, an electric car, a ship, or a spacecraft. The electric toy may be a fixed or mobile electric toy, for example, a game console, an electric vehicle toy, an electric ship toy, and an electric airplane toy. The spacecraft may be an airplane, a rocket, a space shuttle, a spaceship, or the like.

For ease of description, the electric apparatus of an embodiment of this application being a vehicle 6 is used as an example for description of the following embodiments.

Referring to FIG. 1, FIG. 1 is a schematic structural diagram of the vehicle 6 according to some embodiments of this application. The vehicle 6 may be a fossil fuel vehicle, a natural-gas vehicle, or a new energy vehicle, where the new energy vehicle may be a battery electric vehicle, a hybrid electric vehicle, a range-extended vehicle, or the like. The vehicle 6 is provided with a battery 7 inside, where the battery 7 may be disposed at the bottom, front, or rear of the vehicle 6. The battery 7 may be configured to supply power to the vehicle 6. For example, the battery 7 may be used as an operational power supply for the vehicle 6. The vehicle 6 may further include a controller 8 and a motor 9, where the controller 8 is configured to control the battery 7 to supply power to the motor 9, for example, to satisfy power needs of start, navigation, and driving of the vehicle 6.

In some embodiments of this application, the battery 7 can be used as not only the operational power supply for the vehicle 6 but also a driving power source for the vehicle 6, replacing or partially replacing fossil fuel or natural gas to provide driving traction for the vehicle 6.

Referring to FIG. 2, FIG. 2 is a schematic exploded view of the battery 7 according to some embodiments of this application. The battery 7 includes a box 11 and a battery cell 10, where the battery cell 10 is accommodated in the box 11. The box 11 is configured to provide an accommodating space for the battery cell 10. The box 11 may be a variety of structures. In some embodiments, the box 11 may include a top cover 1101 and a bottom box 1102. The top cover 1101 and the bottom box 1102 fit together to jointly define a space for accommodating the battery cell 10. The bottom box 1102 may be a hollow structure with one end open, and the top cover 1101 may be a plate structure, where the top cover 1101 covers an open side of the bottom box 1102, so that the top cover 1101 and the bottom box 1102 jointly define an accommodating space. The top cover 1101 and the bottom box 1102 may both be a hollow structure with one side open, and the open side of the top cover 1101 covers the open side of the bottom box 1102. Certainly, the box 11 formed by the top cover 1101 and the bottom box 1102 may be a variety of shapes, such as a cylinder and a cuboid.

In the battery 7, the battery cell 10 may be present in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then an entirety of the plurality of battery cells 10 is accommodated in the box 11, or certainly, the battery 7 may be formed by a plurality of battery cells 10 being connected in series, parallel, or series-parallel first to form a battery module and then a plurality of battery modules being connected in series, parallel, or series-parallel to form an entirety which is accommodated in the box 11. The battery 7 may further include other structures. For example, the battery 7 may further include a busbar (not shown in the figure) configured to implement electrical connection between the plurality of battery cells 10.

Each battery cell 10 may be a secondary battery or a primary battery, and may be a lithium-sulfur battery, a sodium-ion battery, or a magnesium-ion battery, without being limited thereto. The battery cell 10 may be cylindrical, flat, cuboid, or of other shapes.

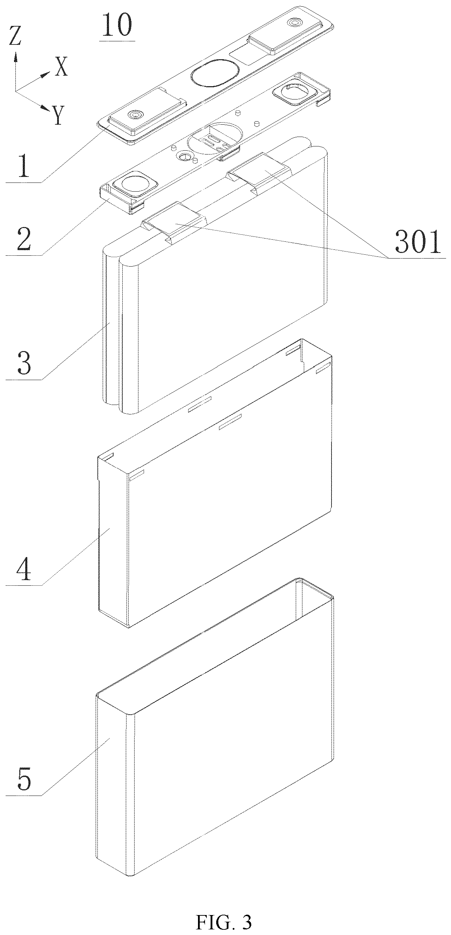

Referring to FIG. 3, FIG. 3 is a schematic exploded view of the battery cell 10 according to some embodiments of this application. The battery cell 10 refers to a smallest element constituting the battery 7. As shown in FIG. 3, the battery cell 10 includes an end cover 1, an electrode assembly 3, a housing 5, and other functional components.

The end cover 1 refers to a component that covers an opening of the housing 5 to isolate an internal environment of the battery cell 10 from an external environment thereof. A shape of the end cover 1 is not limited and may be adapted to a shape of the housing 5 to fit the housing 5. Optionally, the end cover 1 may be made of a material (such as aluminum alloy) with specified hardness and strength, so that the end cover 1 is difficult to deform under mutual pressing and collision, allowing the battery cell 10 to have a higher structural strength and improved safety performance. Functional components such as an electrode terminal may be provided on the end cover 1. The electrode terminal may be configured to be electrically connected to the electrode assembly 3 for outputting or inputting electrical energy of the battery cell 10. The end cover 1 may also be made of various materials, such as copper, iron, aluminum, stainless steel, aluminum alloy, and plastic, which are not particularly limited in the embodiments of this application. In some embodiments, an insulator 2 may also be provided inside the end cover 1, and the insulator 2 may be configured to isolate an electrical connection component in the housing 5 from the end cover 1 to reduce risks of short circuit. For example, the insulator 2 may be made of plastic, rubber, or the like. In some embodiments, the end cover 1 is further provided with an interface for monitoring the internal of the battery cell, where an internal status of the battery cell is monitored through the monitoring interface.

The housing 5 is an assembly configured to cooperate with the end cover 1 to form an internal environment of the battery cell 10, where the formed internal environment can be configured to accommodate the electrode assembly 3, an electrolyte, and other components. The housing 5 and the end cover 1 may be separate components, an opening may be provided on the housing 5, and the end cover 1 covers the opening to form the internal environment of the battery cell 10. Without limitation, the end cover 1 and the housing 5 may alternatively be integrated. Specifically, the end cover 1 and the housing 5 may form a shared connection surface before other components are disposed inside the housing. When the inside of the housing 5 needs to be enclosed, the housing 5 is covered with the end cover 1. The housing 5 may be a variety of shapes and sizes, such as a cuboid, a cylinder, and a hexagonal prism. Specifically, a shape of the housing 5 may be determined according to a specific shape and size of the electrode assembly 3. The housing 5 may be made of various materials, such as copper, iron, aluminum, stainless steel, aluminum alloy, and plastic, which are not particularly limited in the embodiments of this application.

The electrode assembly 3 is a component in the battery cell 10, where the component is infiltrated in the electrolyte for electrochemical reactions. The housing 5 may include one or more electrode assemblies 3. The electrode assembly 3 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a body portion of the electrode assembly 3, while parts of the positive electrode plate and the negative electrode plate that have no active substances separately constitute a tab. A positive tab and a negative tab may both be located at one end of the body portion or be located at two ends of the body portion respectively. During charging and discharging of the battery cell, a positive electrode active substance and a negative electrode active substance react with an electrolyte, and the tabs are connected to the electrode terminals to form a current loop.

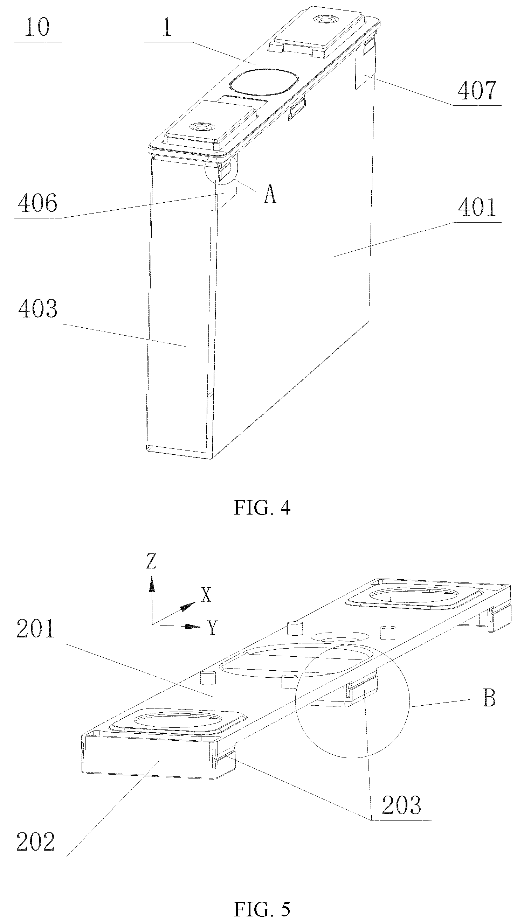

FIG. 3 and FIG. 4 show a battery cell 10 according to an embodiment of this application. The battery cell includes: an end cover 1 and a housing 5, the end cover 1 and the housing 5 forming an accommodating cavity; an electrode assembly 3 accommodated in the accommodating cavity; an insulator 2 configured to isolate the end cover 1 from the electrode assembly 3; and a protective film 4 fitting around outer circumference of the electrode assembly 3, the protective film 4 and the insulator 2 being fit together through snap connection.

The protective film 4 and the insulator 2 being fit together through snap connection does not require hot-melt connection during assembly, thereby avoiding drawing caused by hot-melt connection while such drawing affects the quality of welding between the end cover 1 and the housing 5. In addition, the protective film 4 and the insulator 2 being fit together through snap connection offers higher reliability, which can prevent fall-off of the protective film 4 caused by undesirable hot melt of the protective film 4 and the insulator 2 and hence further keep a relative relationship of the protective film 4 and the electrode assembly 3 unchanged for a long time, so that the electrode assembly 3 is better protected and the safety of batteries is improved. Further, the protective film 4 and the insulator 2 being fit together through snap connection saves both time and labor during the assembly, improving production efficiency of batteries.

The battery cell in this embodiment may be a cuboid or cubic, and is cuboid in the drawings. The protective film 4 in the art is commonly referred to as mylar and is a polyester film.

In some embodiments, as shown in FIG. 5, FIG. 6, and FIG. 7, the insulator 2 is provided with buckles 203, the protective film 4 is provided with holes 408 corresponding to the buckles 203, and the protective film 4 and the insulator 2 are fit together through snap connection with the holes 408 and the buckles 203.

The insulator 2 is provided with a plurality of buckles 203, and the protective film 4 is provided with a plurality of holes 408 corresponding to the buckles 203. For example, two sides of the insulator 2 in a length direction X of the end cover 1 (direction of axis X in FIG. 5) are provided with a total of six buckles 203, and the protective film 4 is provided with six holes 408. The number of the buckles 203 and holes 408 may increase or decrease depending on structures of the battery cell.

A fitting structure of the protective film 4 and the insulator 2 may be designed in various types. The fitting structure of the buckle 203 and the hole 408 not only is convenient for design and manufacturing, but also helps to fit the protective film 4 and the insulator 2 together. In addition, the protective film 4 and the insulator 2 that are fit together through snap connection are difficult to disengage, thereby guaranteeing the fitting firmness of the protective film 4 and the insulator 2.

In some embodiments, as shown in FIG. 5, the insulator 2 has lug bosses 202 protruding toward the electrode assembly 3, the lug bosses 202 are configured to abut against the electrode assembly 3, and the buckles 203 are disposed on the lug bosses 202. In FIG. 3, the insulator 2 is provided with 3 lug bosses 202. The number of the lug boss 202 may increase or decrease depending on structures of the battery cell. The inside of the lug boss 202 is of a hollow structure, so that the weight of the insulator 2 can be reduced while the structural requirements are satisfied.

The lug boss 202 substantially increases the thickness of the insulator 2 and therefore has much room for design. With reasonable use of the structure of the lug boss 202, buckles 203 having different structures can be designed as needed.

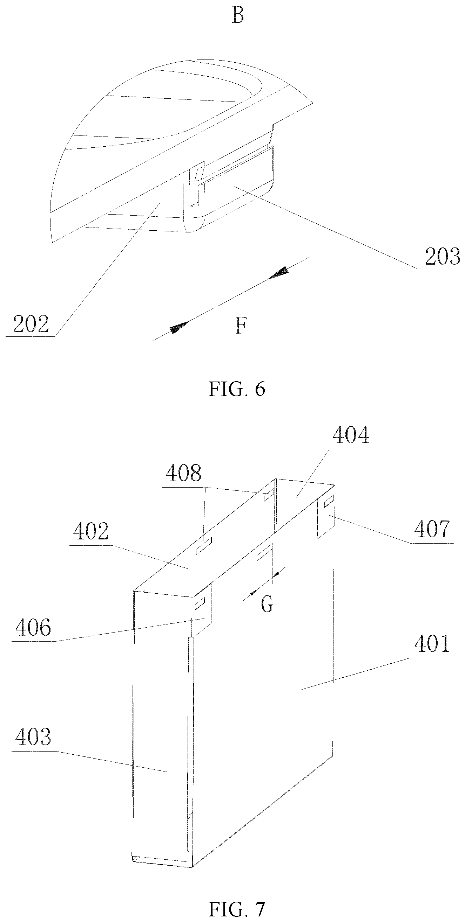

As shown in FIG. 6 and FIG. 7, length of the hole 408 is G, and length of the buckle 203 is F, where F<G. Because the buckle 203 and the hole 408 are both provided in plurality, F<G offers a movement margin for the buckle 203 in the hole 408, ensuring that the buckle 203 can enter each hole 408.

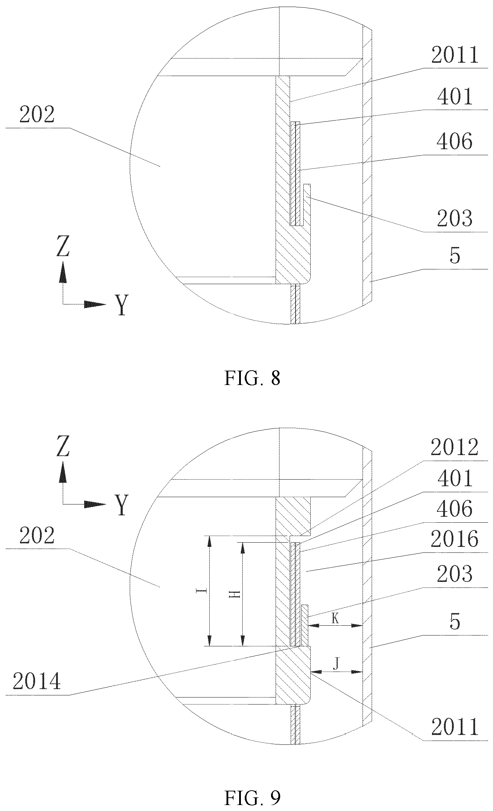

In some embodiments, as shown in FIG. 8, the insulator 2 has an outer side surface 2011 facing toward an inner wall of the housing 5, and the buckle 203 is disposed on the outer side surface 2011.

The buckle 203 being disposed on the outer side surface 2011 is relatively easy for design and manufacture. With the protective film 4 fitting around the outer circumference of the electrode assembly 3, all parts of the protective film 4 gradually approach the outer side surface 2011 of the insulator 2 during folding. The buckles 203 are disposed on the outer side surface 2011 of the insulator 2 so that the protective film 4 can be fit to the insulator 2 upon being folded. This offers a quick fitting without additional adjustment, and hence an easy fitting of the protective film 4 and the insulator 2.

In some embodiments, as shown in FIG. 9, FIG. 10, and FIG. 11, the outer side surface 2011 is provided with grooves 2016, and the buckle 203 is disposed in the groove 2016.

The groove 2016 is formed through recession of the outer side surface 2011, and the internal space of the groove 2016 can be provided with the buckle 203. High energy density of batteries is a quality goal that is consistently pursued in a battery manufacturing process. Therefore, the volume of the batteries needs to be reduced, and the utilization of the internal space of the batteries needs to be increased. The buckle 203 being disposed in the groove 2016 can reduce the space occupied in the accommodating cavity, and therefore avoids that the housing 5 has a too large volume but inefficient volume utilization, which contributes to improving the energy density of the batteries.

In some embodiments, as shown in FIG. 9, a distance between the outer side surface 2011 and the corresponding inner wall is J, and a distance between a surface of the buckle 203 facing toward the housing 5 and the corresponding inner wall is K, where J≤K.Generally, J=K may be selected so that the outer side surface 2011 and the surface of the buckle 203 facing toward the housing 5 are located on a same plane.

During assembly of the battery cell, the insulator 2, the electrode assembly 3, and the protective film 4 need to be together mounted in the housing 5. The limitation on the distance relationship between the buckle 203 and the outer side surface 2011 prevents the buckle 203 from protruding out of the outer side surface 2011 of the insulator 2, which helps the insulator 2 to enter the housing 5 and facilitates assembly of the battery cell.

In some embodiments, as shown in FIG. 9, height of part of the protective film 4 located in the groove 2016 is H, and height of the groove 2016 is I, where H<I.

The height of the part of the protective film 4 located in the groove 2016 is limited, so that the protective film 4 and the insulator 2 are in close engagement after being fit together through snap connection and the protective film 4 does not wrinkle at the fitting location and still remains flat.

In some embodiments, as shown in FIG. 9, in a thickness direction of the end cover 1 (direction of axis Z in FIG. 9), the groove 2016 has a first surface 2012 and a second surface 2014 that are disposed opposite, the second surface 2014 is further away from the end cover 1 than the first surface 2012, and the buckle 203 is disposed on the second surface 2014.

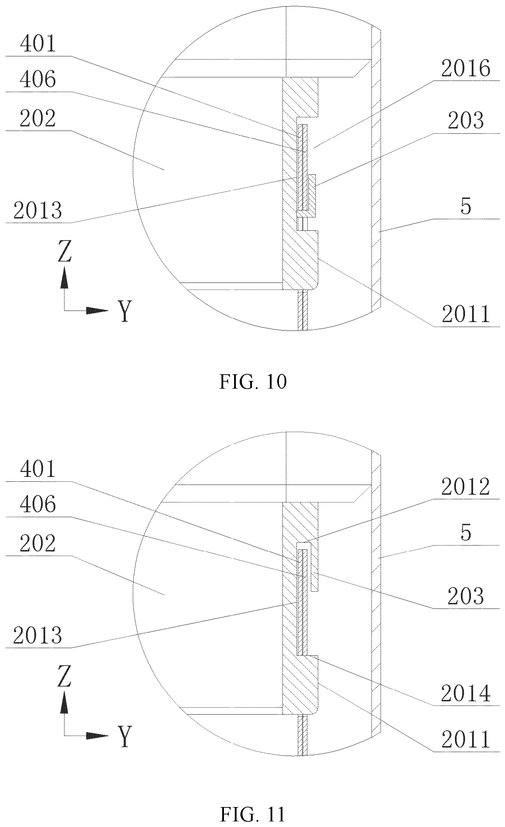

Because different types of batteries have different internal structures, the buckle 203 can be disposed at different locations of the groove 2016 depending on actual needs to satisfy different battery use needs. The buckle 203 being disposed on the second surface 2014 allows the protective film 4 and the insulator 2 to obtain high fitting firmness. As shown in FIG. 10, the buckle 203 may alternatively be disposed on a third surface 2013. As shown in FIG. 11, the buckle 203 may alternatively be disposed on the first surface 2012.

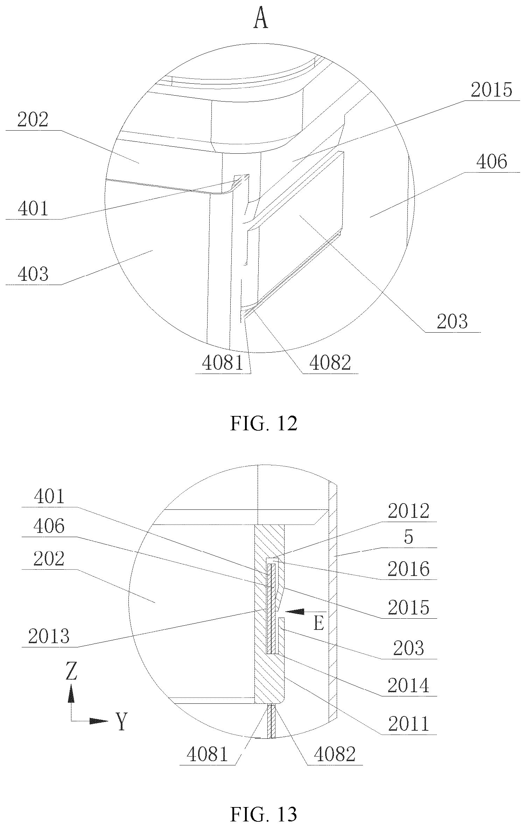

In some embodiments, as shown in FIG. 12 and FIG. 13, the first surface 2012 is provided with a blocking portion 2015 extending toward the second surface 2014, the blocking portion 2015 and the buckle 203 are spaced apart, and the blocking portion 2015 and the protective film 4 overlap in a receding direction of the groove 2016. The receding direction of the groove 2016 is a direction E in FIG. 13.

There is a relatively narrow gap between the blocking portion 2015 and the buckle 203, and an edge of the protective film 4 enters the groove 2016 from such gap and is fit to the buckle 203. With the protective film 4 and the insulator 2 fit together through snap connection, the blocking portion 2015 forms a position limiting structure for the protective film 4, and together with the buckle 203 can effectively prevent the protective film 4 from running out of the buckle 203.

In some embodiments, as shown in FIG. 13, the groove 2016 has a third surface 2013 for connecting the first surface 2012 and the second surface 2014, and an end portion of the blocking portion 2015 facing toward the second surface 2014 extends toward the third surface 2013 to form a bending portion.

The bending portion can provide two functions. When the protective film 4 and the insulator 2 are being fit together through snap connection, the bending portion forms a guide structure to help an edge of the protective film 4 to enter the buckle 203. After the protective film 4 and the insulator 2 are fit together through snap connection, the bending portion can further effectively prevent the protective film 4 from running out of the buckle 203.

In some embodiments, as shown in FIG. 5 and FIG. 6, in a length direction of the end cover 1, the lug boss 202 has two end surfaces, and the groove 2016 runs through the two end surfaces.

The length direction of the end cover 1 is the direction of axis X in FIG. 5, a width direction of the end cover 1 is the direction of axis Y in FIG. 5, and the thickness direction of the end cover 1 is the direction of axis Z in FIG. 5. The groove 2016 is designed as a structure with two ends open, so that the protective film 4 and the insulator 2 are in close engagement after being fit together through snap connection and the protective film 4 does not wrinkle at the fitting location and still remains flat.

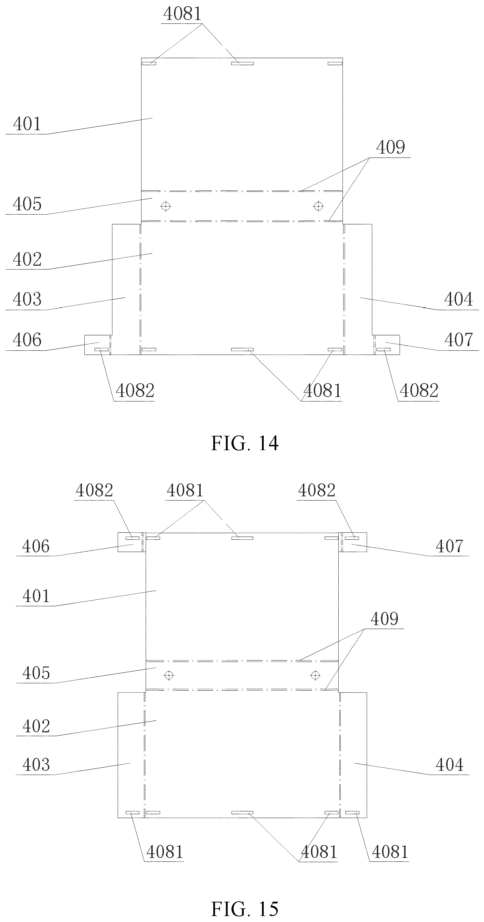

In some embodiments, as shown in FIG. 14 and FIG. 15, the protective film 4 includes two first protection portions that are disposed opposite in a thickness direction of the electrode assembly 3 and two second protection portions that are disposed opposite each other in the length direction of the end cover 1, and the thickness direction of the end cover 1, the thickness direction of the electrode assembly 3, and the length direction of the end cover 1 are perpendicular to each other. The two first protection portions are first protection portion 401 and first protection portion 402, respectively; and the two second protection portions are second protection portion 403 and second protection portion 404, respectively. The first protection portion 401 and the first protection portion 402 are connected by the third protection portion 405.

As shown in FIG. 14, each of the second protection portions 402 is provided with an extension portion, a side of the second protection portion 403 is provided with a first extension portion 406, and a side of the second protection portion 404 is provided with a second extension portion 407. After the protective film 4 is folded, the extension portion extends to a side of the first protection portion further away from the electrode assembly 3 (the side is corresponding to the largest face of the electrode assembly 3). The holes 408 include first holes 4081 disposed in the first protection portion and second holes 4082 disposed in the extension portion, and the second hole 4082 and the first hole 4081 partially overlap to make the second hole 4082 and the first hole 4081 fit in a same buckle 203. Such structure is shown in FIG. 12 and FIG. 13: the first extension portion 406 is located on a side of the first protection portion 401 further away from the electrode assembly 3, and the second hole 4082 and the first hole 4081 partially overlap and fit in a same buckle 203.

In some embodiments, as shown in FIG. 15, each of the first protection portions is provided with an extension portion. The first protection portion 401 is used as an example for description: two sides of the first protection portion 401 are provided with a first extension portion 406 and a second extension portion 407, respectively. After the protective film 4 is folded, the first extension portion 406 extends to a side of the second protection portion 403 further away from the electrode assembly 3 (a face of the electrode assembly 3 in the width direction Y of the end cover, namely a smallest face of the electrode assembly 3), and the second extension portion 407 extends to a side of the second protection portion 404 further away from the electrode assembly 3. The holes 408 include first holes 4081 disposed in the second protection portion and second holes 4082 disposed in the extension portion, and the second hole 4082 and the first hole 4081 partially overlap to make the second hole 4082 and the first hole 4081 fit in a same buckle 203.

With the extension portion provided, the extension portion together with the buckle 203 can connect the two first protection portions and the two second protection portions, so that all parts of the protective film 4 are combined into a whole and difficult to disengage, and the connection reliability of the protective film 4 and the insulator 2 is increased.

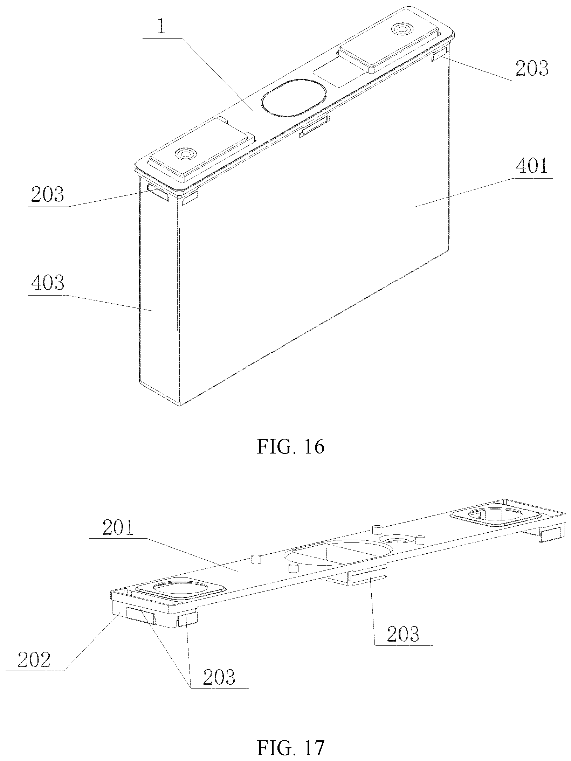

In some embodiments, as shown in FIG. 16, FIG. 17, and FIG. 18, the protective film 4 is not provided with an extension portion, the holes 408 include first holes 4081 disposed in the first protection portion and first holes 4081 disposed in the second protection portion. After the protective film 4 is folded, the first protection portion 401, the first protection portion 402, the second protection portion 403, and the second protection portion 404 are fit to the buckles 203 through the first holes 4081.

Accordingly, the lug boss 202 disposed on two ends of the insulator 2 is provided with three buckles 203, where the buckles 203 on two ends of the insulator 2 respectively fit in the first holes 4081 in the second protection portion 403 and the second protection portion 404. An escape portion is disposed between the three buckles 203, and the bottom of the escape portion is lower than the outer side surface of the buckle 203. When the edge of the protective film 4 enters the buckle 203, the escape portion can eliminate interference among the plurality of protection portions of the protective film 4.

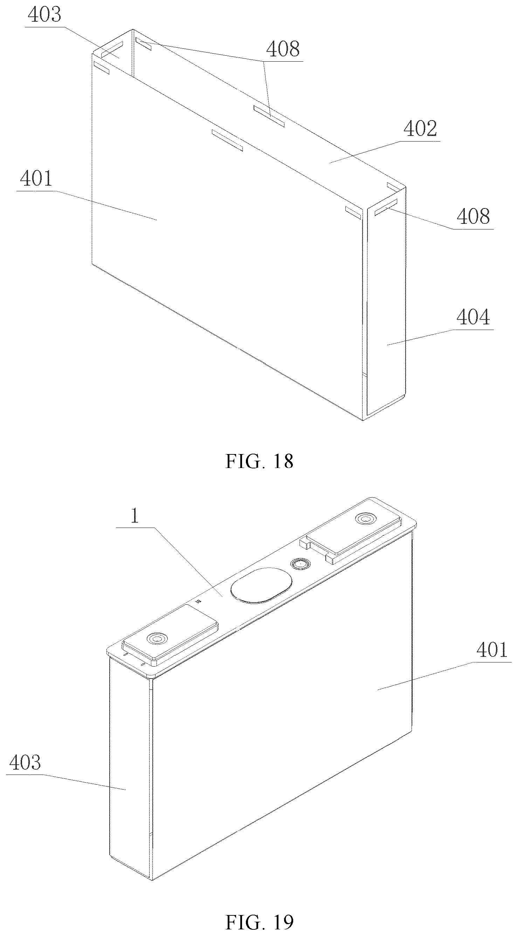

In some embodiments, as shown in FIG. 19, FIG. 20, and FIG. 21, the insulator 2 is provided with holes 204, the protective film 4 is provided with lug bosses 410 corresponding to the holes 204, and the protective film 4 and the insulator 2 are fit together through snap connection with the lug bosses 204 and the holes 410.

The insulator 2 is provided with a plurality of holes 204, and the protective film 4 is provided with a plurality of lug bosses 410 corresponding to the holes 204. For example, two sides of the insulator 2 in the length direction X are provided with a total of eight holes 204, and the protective film 4 is provided with eight lug bosses 410. The number of the holes 204 and lug bosses 410 may increase or decrease depending on structures of the battery cell.

A fitting structure of the protective film 4 and the insulator 2 may be designed in various types. The mating structure of the lug boss 410 and the hole 204 also helps to fit the protective film 4 and the insulator 2 together so that the protective film 4 can be fit to the insulator 2 upon being folded. This offers a quick fitting without additional adjustment, and hence an easy fitting of the protective film 4 and the insulator 2.

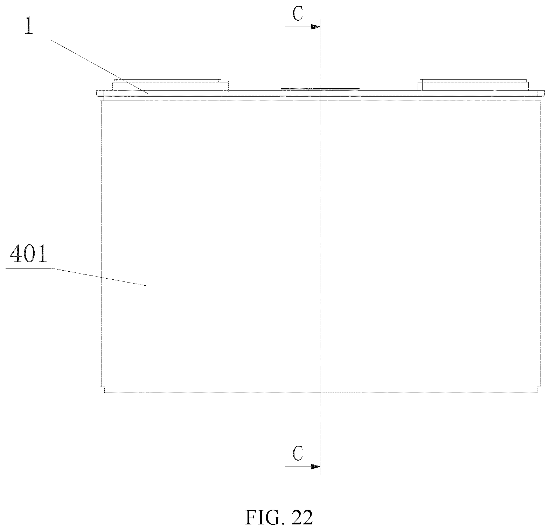

As shown in FIG. 22, FIG. 23, and FIG. 24, the lug boss 410 is secured onto an inner side of the protective film 4 and protrudes toward the inside of the lug boss 202, and each lug boss 410 is inserted into one corresponding hole 204. As the inside of the lug boss 202 is of a hollow structure, the lug boss 410 can be inserted into the hole 204.

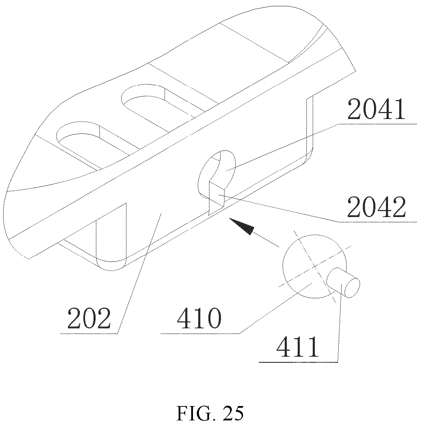

In some embodiments, as shown in FIG. 25, a connecting portion 411 is disposed between the lug boss 410 and an inner wall of the protective film 4, the hole 204 includes a first section 2041 and a second section 2042, the second section 2042 is disposed on a side of the first section 2041 further away from the end cover 1, at least part of the connecting portion 411 is disposed at the second section 2042, and the lug boss 410 and the first section 2041 are in interference fit to prevent the lug boss 410 from running out of the first section 2041.

The interference fit of the lug boss 410 and the first section 2041 can prevent the lug boss 410 from easily running out of the hole 204 after the lug boss 410 enters the hole 204, thereby guaranteeing fitting firmness of the protective film 4 and the insulator 2.

The lug boss 410 may be spherical, cylindrical, prismatic or frustum-shaped, the first section 2041 may be circular or polygonal, and the connecting portion 411 may be cylindrical or prismatic.

For example, the lug boss 410 being spherical, the connecting portion 411 being cylindrical, and the first section 2041 being circular are used for description. In this case, the diameter of the connecting portion 411 needs to smaller than the diameter of the lug boss 410, the width of the second section 2042 needs to be smaller than the diameter of the first section 2041, and the diameter of the lug boss 410 needs to be slightly larger than the diameter of the first section 2041, so that when the lug boss 410 is inserted into the corresponding hole 204 and the connecting portion 411 is disposed at the second section 2042, the lug boss 410 and the first section 2041 are in interference fit, thereby preventing the lug boss 410 from running out of the hole 204.

According to a second aspect of this application, a battery is provided. As shown in FIG. 2, the battery includes the foregoing battery cell 10 in the first aspect. For those not described in detail in this embodiment, refer to the foregoing embodiments.

According to a third aspect of this application, an electric apparatus is provided, as shown in FIG. 1. The electric apparatus includes the foregoing battery cell 10 in the first aspect, where the battery cell 10 is configured to supply electrical energy. For those not described in detail in this embodiment, refer to the foregoing embodiments.

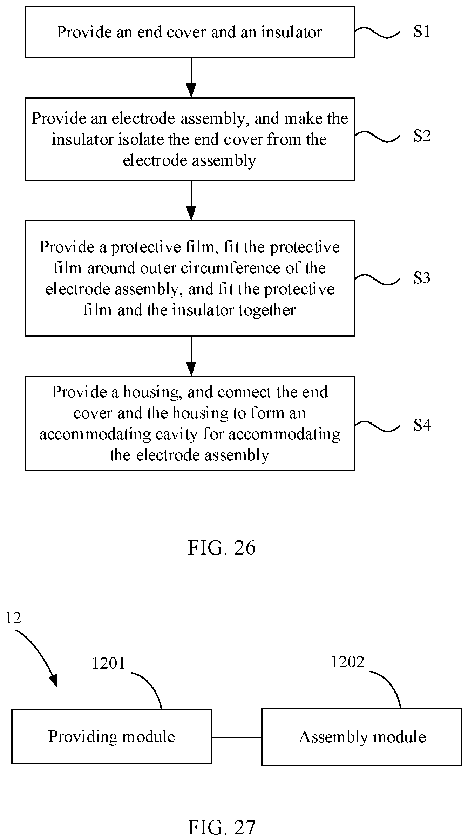

According to a fourth aspect of this application, a manufacturing method of battery cell is provided. As shown in FIG. 26, the manufacturing method of battery cell includes:
Step S1: Provide an end cover 1 and an insulator 2.
Step S2: Provide an electrode assembly 3, and make the insulator 2 isolate the end cover 1 from the electrode assembly 3.
Step S3: Provide a protective film 4, fit the protective film 4 around outer circumference of the electrode assembly 3, and fit the protective film 4 and the insulator 2 together.
Step S4: Provide a housing 5, and connect the end cover 1 and the housing 5 to form an accommodating cavity for accommodating the electrode assembly 3.

For those not described in detail in this embodiment, refer to the foregoing embodiments.

A manufacturing device 7 of battery cell is not encompassed by the subject-matter of the claims. As shown in FIG. 27, the manufacturing device 12 of battery cell includes:
a providing module 1201, configured to provide an end cover 1, a housing 5, an electrode assembly 3, an insulator 2, and a protective film 4; and
an assembly module 1202, configured for the insulator 2 to isolate the end cover 1 from the electrode assembly 3, and configured to fit the protective film 4 around outer circumference of the electrode assembly 3, fit the protective film 4 and the insulator 2 together, and connect the end cover 1 and the housing 5 to form an accommodating cavity for accommodating the electrode assembly 3.

For those not described in detail in this embodiment, refer to the foregoing embodiments.

## Claims

1. A battery cell (10), comprising:
an end cover (1) and a housing (5), the end cover (1) and the housing (5) forming an accommodating cavity;
an electrode assembly (3) accommodated in the accommodating cavity;
an insulator (2) configured to isolate the end cover (1) from the electrode assembly (3); and
a protective film (4) fitting around an outer circumference of the electrode assembly (3), **characterized in that** the protective film (4) and the insulator (2) being fit together through snap connection; and that the insulator (2) is provided with buckles (203), the protective film (4) is provided with holes (408) corresponding to the buckles (203), and the protective film (4) and the insulator (2) are fit together through snap connection with the holes (408) and the buckles (203).

2. The battery cell (10) according to claim 1, wherein the insulator (2) has an outer side surface (2011) facing toward an inner wall of the housing (5), and the buckles (203) are disposed on the outer side surface (2011).

3. The battery cell (10) according to claim 2, wherein the outer side surface (2011) is provided with grooves (2016), and the buckles (203) are disposed in the grooves (2016).

4. The battery cell (10) according to claim 3, wherein a distance between the outer side surface (2011) and the corresponding inner wall is J, and a distance between a surface of the buckle (203) facing toward the housing (5) and the corresponding inner wall is K, wherein J≤K.

5. The battery cell (10) according to claim 3 or 4, wherein in a thickness direction of the end cover (1), the groove (2016) has a first surface (2012) and a second surface (2014) that are disposed opposite, the second surface (2014) is further away from the end cover (1) than the first surface (2012), and the buckle (203) is disposed on the second surface (2014).

6. The battery cell (10) according to claim 5, wherein the first surface (2012) is provided with a blocking portion (2015) extending toward the second surface (2014), the blocking portion (2015) and the buckle (203) are spaced apart, and the blocking portion (2015) and the protective film (4) overlap in a receding direction of the groove (2016); optionally the groove (2016) has a third surface (2013) for connecting the first surface (2012) and the second surface (2014), and an end portion of the blocking portion (2015) facing toward the second surface (2014) extends toward the third surface (2013) to form a bending portion.

7. The battery cell (10) according to any one of claims 3 to 6, wherein the insulator (2) has lug bosses (202) protruding toward the electrode assembly (3), the lug bosses (202) are configured to abut against the electrode assembly (3), and the buckles (203) are disposed on the lug bosses (202); optionally in a length direction of the end cover (1), the lug boss (202) has two end surfaces, and the groove (2016) runs through the two end surfaces.

8. The battery cell (10) according to any one of claims 3 to 7, wherein a height of the part of the protective film (4) located in the groove (2016) is H, and a height of the groove (2016) is I, wherein H<I.

9. The battery cell (10) according to any one of claims 1 to 8, wherein the protective film (4) comprises two first protection portions (401, 402) that are disposed opposite in a thickness direction of the electrode assembly (3) and two second protection portions (403, 404) that are disposed opposite each other in the length direction of the end cover (1), and the thickness direction of the end cover (1), the thickness direction of the electrode assembly (3), and the length direction of the end cover (1) are perpendicular to each other; and
each of the second protection portions (403, 404) is provided with an extension portion, wherein the extension portion extends to a side of the first protection portion (401, 402) further away from the electrode assembly (3), the holes (408) comprise first holes (4081) disposed in the first protection portion (401, 402) and second holes (4082) disposed in the extension portion, and the second hole (4082) and the first hole (4081) partially overlap to make the second hole (4082) and the first hole (4081) fit in a same buckle (203); or
each of the first protection portions (401, 402) is provided with an extension portion, wherein the extension portion extends to a side of the second protection portion (403, 404) further away from the electrode assembly (3), the holes (408) comprise first holes (4081) disposed in the second protection portion (403, 404) and second holes (4082) disposed in the extension portion, and the second hole (4082) and the first hole (4081) partially overlap to make the second hole (4082) and the first hole (4081) fit in a same buckle (203).

10. The battery cell (10) according to claim 1, wherein the insulator (2) is provided with holes (204), the protective film (4) is provided with lug bosses (410) corresponding to the holes (204), and the protective film (4) and the insulator (2) are fit together through snap connection with the lug bosses (410) and the holes (204); optionally a connecting portion (411) is disposed between the lug boss (410) and an inner wall of the protective film (4), the hole (204) comprises a first section (2041) and a second section (2042), the second section (2042) is disposed on a side of the first section (2041) further away from the end cover (1), at least part of the connecting portion (411) is disposed at the second section (2042), and the lug boss (410) and the first section (2041) are in interference fit to prevent the lug boss (410) from running out of the first section (2041).

11. A battery (7), comprising the battery cell (10) according to any one of claims 1 to 10.

12. An electric apparatus, comprising the battery cell (10) according to any one of claims 1 to 10, wherein the battery cell (10) is configured to supply electrical energy.

13. A manufacturing method of a battery cell, comprising:
providing (S1) an end cover (1) and an insulator (2);
providing (S2) an electrode assembly (3), and making the insulator (2) isolate the end cover (1) from the electrode assembly (3);
providing (S3) a protective film (4), fitting the protective film (4) around an outer circumference of the electrode assembly (3), and fitting the protective film (4) and the insulator (2) together, wherein the insulator (2) is provided with buckles (203), the protective film (4) is provided with holes (408) corresponding to the buckles (203), and the protective film (4) and the insulator (2) are fit together through snap connection with the holes (408) and the buckles (203); and
providing (S4) a housing (5), and connecting the end cover (1) and the housing (5) to form an accommodating cavity for accommodating the electrode assembly (3).

## Patentansprüche

1. Batteriezelle (10), die Folgendes umfasst:
eine Endabdeckung (1) und ein Gehäuse (5), wobei die Endabdeckung (1) und das Gehäuse (5) einen Aufnahmehohlraum bilden;
eine Elektrodenanordnung (3), die in dem Aufnahmehohlraum untergebracht ist;
einen Isolator (2), der dazu ausgebildet ist, die Endabdeckung (1) von der Elektrodenanordnung (3) zu isolieren; und
eine Schutzfolie (4), die um einen Außenumfang der Elektrodenanordnung (3) herumgelegt ist, **dadurch gekennzeichnet, dass** die Schutzfolie (4) und der Isolator (2) durch eine Schnappverbindung zusammengefügt sind; und dass der Isolator (2) mit Schnallen (203) versehen ist, die Schutzfolie (4) mit Löchern (408) versehen ist, die den Schnallen (203) entsprechen, und die Schutzfolie (4) und der Isolator (2) durch eine Schnappverbindung mit den Löchern (408) und den Schnallen (203) zusammengefügt sind.

2. Batteriezelle (10) nach Anspruch 1, wobei der Isolator (2) eine äußere Seitenfläche (2011) besitzt, die einer Innenwand des Gehäuses (5) zugewandt ist, und die Schnallen (203) auf der äußeren Seitenfläche (2011) angeordnet sind.

3. Batteriezelle (10) nach Anspruch 2, wobei die äußere Seitenfläche (2011) mit Nuten (2016) versehen ist und die Schnallen (203) in den Nuten (2016) angeordnet sind.

4. Batteriezelle (10) nach Anspruch 3, wobei ein Abstand zwischen der äußeren Seitenfläche (2011) und der entsprechenden Innenwand J ist und ein Abstand zwischen einer dem Gehäuse (5) zugewandten Oberfläche der Schnalle (203) und der entsprechenden Innenwand K ist, wobei J ≤ K.

5. Batteriezelle (10) nach Anspruch 3 oder 4, wobei in einer Dickenrichtung der Endabdeckung (1) die Nut (2016) eine erste Oberfläche (2012) und eine zweite Oberfläche (2014) besitzt, die einander gegenüberliegen, die zweite Oberfläche (2014) von der Endabdeckung (1) weiter entfernt ist als die erste Oberfläche (2012), und die Schnalle (203) auf der zweiten Oberfläche (2014) angeordnet ist.

6. Batteriezelle (10) nach Anspruch 5, wobei die erste Oberfläche (2012) mit einem Blockierabschnitt (2015) versehen ist, der sich in Richtung zu der zweiten Oberfläche (2014) erstreckt, der Blockierabschnitt (2015) und die Schnalle (203) voneinander beabstandet sind, und der Blockierabschnitt (2015) und die Schutzfolie (4) sich in einer fliehenden Richtung der Nut (2016) überlappen; optional besitzt die Nut (2016) eine dritte Oberfläche (2013) zum Verbinden der ersten Oberfläche (2012) und der zweiten Oberfläche (2014), und ein der zweiten Oberfläche (2014) zugewandter Endabschnitt des Blockierabschnitts (2015) erstreckt sich in Richtung zu der dritten Oberfläche (2013) um einen gebogenen Abschnitt zu bilden.

7. Batteriezelle (10) nach einem der Ansprüche 3 bis 6, wobei der Isolator (2) Laschenvorsprünge (202) besitzt, die in Richtung der Elektrodenanordnung (3) vorstehen, die Laschenvorsprünge (202) dazu ausgebildet sind, gegen die Elektrodenanordnung (3) zu stoßen, und die Schnallen (203) auf den Laschenvorsprüngen (202) angeordnet sind; optional besitzt der Laschenvorsprung (202) in Längsrichtung der Endabdeckung (1) zwei Stirnflächen, und die Nut (2016) verläuft durch die zwei Stirnflächen.

8. Batteriezelle (10) nach einem der Ansprüche 3 bis 7, wobei eine Höhe des in der Nut (2016) befindlichen Teils der Schutzfolie (4) H ist und eine Höhe der Nut (2016) I ist, wobei H < I.

9. Batteriezelle (10) nach einem der Ansprüche 1 bis 8, wobei die Schutzfolie (4) zwei erste Schutzabschnitte (401, 402) umfasst, die einander in Dickenrichtung der Elektrodenanordnung (3) gegenüberliegen, und zwei zweite Schutzabschnitte (403, 404), die einander in Längsrichtung der Endabdeckung (1) gegenüberliegen, und die Dickenrichtung der Endabdeckung (1), die Dickenrichtung der Elektrodenanordnung (3) und die Längsrichtung der Endabdeckung (1) zueinander senkrecht sind; und
jeder der zweiten Schutzabschnitte (403, 404) mit einem Verlängerungsabschnitt versehen ist, wobei sich der Verlängerungsabschnitt zu einer von der Elektrodenanordnung (3) weiter entfernten Seite des ersten Schutzabschnitts (401, 402) erstreckt, die Löcher (408) erste Löcher (4081) umfassen, die in dem ersten Schutzabschnitt (401, 402) angeordnet sind, und zweite Löcher (4082), die in dem Verlängerungsabschnitt angeordnet sind, und das zweite Loch (4082) und das erste Loch (4081) sich teilweise überlappen, um dafür zu sorgen, dass das zweite Loch (4082) und das erste Loch (4081) in dieselbe Schnalle (203) passen; oder
jeder der ersten Schutzabschnitte (401, 402) mit einem Verlängerungsabschnitt versehen ist, wobei sich der Verlängerungsabschnitt zu einer von der Elektrodenanordnung (3) weiter entfernten Seite des zweiten Schutzabschnitts (403, 404) erstreckt, die Löcher (408) erste Löcher (4081) umfassen, die in dem zweiten Schutzabschnitt (403, 404) angeordnet sind, und zweite Löcher (4082), die in dem Verlängerungsabschnitt angeordnet sind, und das zweite Loch (4082) und das erste Loch (4081) sich teilweise überlappen, um dafür zu sorgen, dass das zweite Loch (4082) und das erste Loch (4081) in dieselbe Schnalle (203) passen.

10. Batteriezelle (10) nach Anspruch 1, wobei der Isolator (2) mit Löchern (204) versehen ist, die Schutzfolie (4) mit Laschenvorsprüngen (410) versehen ist, die den Löchern (204) entsprechen, und die Schutzfolie (4) und der Isolator (2) durch eine Schnappverbindung mit den Laschenvorsprüngen (410) und den Löchern (204) zusammengefügt sind;
optional ist ein Verbindungsabschnitt (411) zwischen dem Laschenvorsprung (410) und einer Innenwand der Schutzfolie (4) angeordnet, umfasst das Loch (204) einen ersten Abschnitt (2041) und einen zweiten Abschnitt (2042), ist der zweite Abschnitt (2042) auf einer von der Endabdeckung (1) weiter entfernten Seite des ersten Abschnitts (2041) angeordnet, ist wenigstens ein Teil des Verbindungsabschnitts (411) an dem zweiten Abschnitt (2042) angeordnet, und besteht zwischen dem Laschenvorsprung (410) und dem ersten Abschnitt (2041) eine Presspassung, um zu verhindern, dass der Laschenvorsprung (410) aus dem ersten Abschnitt (2041) herausläuft.

11. Batterie (7), welche die Batteriezelle (10) nach einem der Ansprüche 1 bis 10 umfasst.

12. Elektrisches Gerät, das die Batteriezelle (10) nach einem der Ansprüche 1 bis 10 umfasst, wobei die Batteriezelle (10) zur Versorgung mit elektrischer Energie ausgebildet ist.

13. Herstellungsverfahren für eine Batteriezelle, mit den folgenden Schritten:
Bereitstellen (S1) einer Endabdeckung (1) und eines Isolators (2);
Bereitstellen (S2) einer Elektrodenanordnung (3) und dafür sorgen, dass der Isolator (2) die Endabdeckung (1) von der Elektrodenanordnung (3) isoliert;
Bereitstellen (S3) einer Schutzfolie (4), die Schutzfolie (4) um einen Außenumfang der Elektrodenanordnung (3) herumlegen, und Zusammenfügen der Schutzfolie (4) und des Isolators (2), wobei der Isolator (2) mit Schnallen (203) versehen ist, die Schutzfolie (4) mit Löchern (408) versehen ist, die den Schnallen (203) entsprechen, und die Schutzfolie (4) und der Isolator (2) durch eine Schnappverbindung mit den Löchern (408) und den Schnallen (203) zusammengefügt sind; und
Bereitstellen (S4) eines Gehäuses (5) und Verbinden der Endabdeckung (1) und des Gehäuses (5) zu einem Aufnahmehohlraum, um die Elektrodenanordnung (3) darin unterzubringen.

## Revendications

1. Cellule de batterie (10), comprenant :
un couvercle d'extrémité (1) et un boîtier (5), le couvercle d'extrémité (1) et le boîtier (5) formant une cavité de logement ;
un ensemble d'électrodes (3) logé dans la cavité de logement ;
un isolateur (2) configuré pour isoler le couvercle d'extrémité (1) de l'ensemble d'électrodes (3) ; et
un film protecteur (4) posé autour une circonférence extérieure de l'ensemble d'électrodes (3), **caractérisé en ce que** le film protecteur (4) et l'isolateur (2) sont assemblés par encliquetage ; et **en ce que** l'isolateur (2) est pourvu de boucles (203), le film protecteur (4) est pourvu de trous (408) correspondant aux boucles (203), et le film protecteur (4) et l'isolateur (2) sont assemblés par encliquetage avec les trous (408) et les boucles (203).

2. Cellule de batterie (10) selon la revendication 1, dans laquelle l'isolateur (2) présente une surface latérale extérieure (2011) orientée vers une paroi intérieure du boîtier (5), et les boucles (203) sont disposées sur la surface latérale extérieure (2011).

3. Cellule de batterie (10) selon la revendication 2, dans laquelle la surface latérale extérieure (2011) est pourvue de rainures (2016), et les boucles (203) sont disposées dans les rainures (2016).

4. Cellule de batterie (10) selon la revendication 3, dans laquelle une distance entre la surface latérale extérieure (2011) et la paroi intérieure correspondante est J, et une distance entre une surface de la boucle (203) orientée vers le boîtier (5) et la paroi intérieure correspondante est K, dans laquelle J ≤ K.

5. Cellule de batterie (10) selon la revendication 3 ou 4, dans laquelle dans une direction d'épaisseur du couvercle d'extrémité (1) la rainure (2016) présente une première surface (2012) et une deuxième surface (2014) qui sont disposées en face, la deuxième surface (2014) est plus éloignée du couvercle d'extrémité (1) que la première surface (2012), et la boucle (203) est disposée sur la deuxième surface (2014).

6. Cellule de batterie (10) selon la revendication 5, dans laquelle la première surface (2012) est pourvue d'une partie de blocage (2015) s'étendant vers la deuxième surface (2014), la partie de blocage (2015) et la boucle (203) sont espacées, et la partie de blocage (2015) et le film protecteur (4) se chevauchent dans une direction reculée de la rainure (2016) ; éventuellement, la rainure (2016) présente une troisième surface (2013) pour relier la première surface (2012) et la deuxième surface (2014), et une partie d'extrémité de la partie de blocage (2015) orientée vers la deuxième surface (2014) s'étend vers la troisième surface (2013) pour former une partie de courbure.

7. Cellule de batterie (10) selon l'une quelconque des revendications 3 à 6, dans laquelle l'isolateur (2) présente des bossages de patte (202) faisant saillie vers l'ensemble d'électrodes (3), les bossages de patte (202) sont configurés pour venir en butée contre l'ensemble d'électrodes (3), et les boucles (203) sont disposées sur les bossages de patte (202) ; éventuellement, dans une direction longitudinale du couvercle d'extrémité (1), le bossage de patte (202) présente deux surfaces d'extrémité, et la rainure (2016) passe à travers les deux surfaces d'extrémité.

8. Cellule de batterie (10) selon l'une quelconque des revendications 3 à 7, dans laquelle une hauteur de la partie du film protecteur (4) située dans la rainure (2016) est H, et une hauteur de la rainure (2016) est I, dans laquelle H < I.

9. Cellule de batterie (10) selon l'une quelconque des revendications 1 à 8, dans laquelle le film protecteur (4) comprend deux premières parties de protection (401, 402) qui sont disposées à l'opposé dans une direction d'épaisseur de l'ensemble d'électrodes (3) et deux deuxièmes parties de protection (403, 404) qui sont disposées à l'opposé l'une de l'autre dans la direction longitudinale du couvercle d'extrémité (1), et la direction d'épaisseur du couvercle d'extrémité (1), la direction d'épaisseur de l'ensemble d'électrodes (3), et la direction longitudinale du couvercle d'extrémité (1) sont perpendiculaires l'une à l'autre ; et
chacune des deuxièmes parties de protection (403, 404) est pourvue d'une partie d'extension, dans laquelle la partie d'extension s'étend vers un côté de la première partie de protection (401, 402) plus éloigné de l'ensemble d'électrodes (3), les trous (408) comprennent des premiers trous (4081) disposés dans la première partie de protection (401, 402) et des deuxièmes trous (4082) disposés dans la partie d'extension, et le deuxième trou (4082) et le premier trou (4081) se chevauchent partiellement pour que le deuxième trou (4082) et le premier trou (4081) s'adaptent à une même boucle (203) ; ou
chacune des premières parties de protection (401, 402) est pourvue d'une partie d'extension, dans laquelle la partie d'extension s'étend vers un côté de la deuxième partie de protection (403, 404) plus éloigné de l'ensemble d'électrodes (3), les trous (408) comprennent des premiers trous (4081) disposés dans la deuxième partie de protection (403, 404) et des deuxièmes trous (4082) disposés dans la partie d'extension, et le deuxième trou (4082) et le premier trou (4081) se chevauchent partiellement pour que le deuxième trou (4082) et le premier trou (4081) s'adaptent à une même boucle (203).

10. Cellule de batterie (10) selon la revendication 1, dans lequel l'isolateur (2) est pourvu de trous (204), le film protecteur (4) est pourvu de bossages de patte (410) correspondant aux trous (204), et le film protecteur (4) et l'isolateur (2) sont assemblés par encliquetage avec les bossages de patte (410) et les trous (204) ;
éventuellement, une partie de liaison (411) est disposée entre le bossage de patte (410) et une paroi intérieure du film protecteur (4), le trou (204) comprend une première section (2041) et une deuxième section (2042), la deuxième section (2042) est disposée sur un côté de la première section (2041) plus éloigné du couvercle d'extrémité (1), au moins une partie de la partie de liaison (411) est disposée sur la deuxième section (2042), et le bossage de patte (410) et la première section (2041) sont en ajustement serré pour empêcher le bossage de patte (410) de sortir de la première section (2041).

11. Batterie (7), comprenant la cellule de batterie (10) selon l'une quelconque des revendications 1 à 10.

12. Appareil électrique, comprenant la cellule de batterie (10) selon l'une quelconque des revendications 1 à 10, dans lequel la cellule de batterie (10) est configurée pour fournir de l'énergie électrique.

13. Procédé de fabrication d'une cellule de batterie, comprenant :
fournir (S1) un couvercle d'extrémité (1) et un isolateur (2) ;
fournir (S2) un ensemble d'électrodes (3), et faire en sorte que l'isolateur (2) isole le couvercle d'extrémité (1) de l'ensemble d'électrodes (3) ;
fournir (S3) un film protecteur (4), poser le film protecteur (4) autour de la circonférence extérieure de l'ensemble d'électrodes (3), et assembler le film protecteur (4) et l'isolateur (2), l'isolateur (2) étant pourvu de boucles (203), le film protecteur (4) est pourvu de trous (408) correspondant aux boucles (203), et le film protecteur (4) et l'isolateur (2) sont assemblés par encliquetage avec les trous (408) et les boucles (203) ; et
fournir (S4) un boîtier (5), et relier le couvercle d'extrémité (1) et le boîtier (5) pour former une cavité de logement pour loger l'ensemble d'électrodes (3).
